# DEMANDE DE BREVET EUROPEEN

(11) **EP 1 083 456 A1**
(43) Date de publication de la demande: **14.03.2001**
(21) Numéro de dépôt: 00402433.7
(22) Date de dépôt: 05.09.2000
(51) Int. Cl.: G02C 1/02

(54) **Lunettes à montures percées**

(30) Priorité: 08.09.1999 FR 9911215
(71) Demandeur: Blanvillain, Eric Henri Eugène, 49460 Soulaire et Bourg (FR)
(72) Inventeur: Blanvillain, Eric Henri Eugène, 49460 Soulaire et Bourg (FR)
(74) Mandataire: Cabinet HERRBURGER

(57) **Abrégé**

Lunettes à montures percées comprenant des verres reliés directement au pont et à la charnière tenon des branches par des points d'assemblage réalisés directement sur les verres.

Les points d'assemblage, à l'extrémité du pont (206, 207) ou de la charnière tenon d'une branche, comprennent :
- une patte (202, 203) découpée dans le verre, en saillie par rapport au contour (201) du verre,
- un organe d'assemblage formant un logement (208, 209) pour recevoir la patte (202, 203) par une liaison de forme et être solidarisé à celle-ci.

## Description

La présente invention concerne des lunettes à montures percées comprenant des verres reliés directement au pont et à la charnière tenon des branches par des points d'assemblage réalisés directement sur les verres.

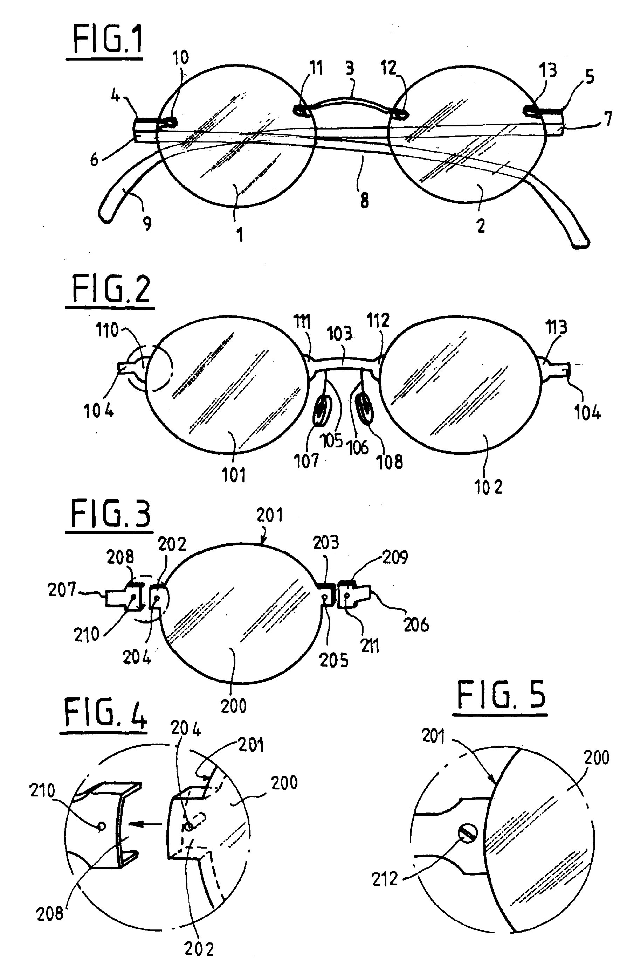

De telles lunettes existent déjà. Un exemple est représenté à la figure 1. Ces lunettes ont l'avantage d'être légères et discrètes mais l'aspect et le champ de vision sont gênés par les points d'assemblage, tant du pont que de l'extrémité de la charnière tenon de chaque branche, sont à l'intérieur du contour des verres.

La présente invention a pour but de remédier aux inconvénients des lunettes à montures percées, connues, et concerne à cet effet des lunettes caractérisées en ce qu'au moins l'un des points d'assemblage, à l'extrémité du pont ou de la charnière tenon d'une branche, comprend :
- une patte découpée dans le verre, en saillie par rapport au contour du verre,
- un organe d'assemblage formant un logement pour recevoir la patte par une liaison de forme et être solidarisé à celle-ci.

De préférence, les quatre points d'assemblage, à savoir les deux points d'assemblage du pont, et le point d'assemblage de chaque charnière tenon de branche, sont réalisés comme indiqué ci-dessus.

La découpe de la forme du verre pour dégager la ou les patte(s) ne présente aucune difficulté particulière et laisser des pattes à l'extérieur du contour du verre, ne crée aucune contrainte qui pourrait limiter la liberté de la forme que l'on souhaite donner au contour des verres.

Suivant une autre caractéristique avantageuse, le logement présente un côté ouvert et a une section en forme de U.

Le logement peut également avoir une section de forme triangulaire, arrondie ou carrée.

La section en U, ouverte d'un côté du logement recevant la patte, que ce soit à l'extrémité de la charnière tenon ou à l'extrémité du pont, permet d'absorber les différentes épaisseurs des verres (épaisseurs qui se retrouvent au niveau des pattes), sans avoir à réaliser des pattes d'épaisseur constante et précise à engager dans un logement à quatre côtés fermés.

La liaison de l'assemblage est de préférence une liaison vissée et notamment une liaison boulonnée.

La présente invention sera décrite ci-après de manière plus détaillée à l'aide des dessins annexés dans lesquels :
- la figure 1 est une vue d'une paire de lunettes selon la technique connue,
- la figure 2 est une vue de paire de lunettes selon l'invention,
- la figure 3 montre une première étape de réalisation de la lunette,
- la figure 4 montre un détail à échelle agrandie de l'étape d'assemblage de la figure 3,
- la figure 5 montre le résultat de l'assemblage d'un verre et d'un dispositif d'assemblage,
- les figures 6 à 10 montrent différents modes de réalisation de lunettes selon l'invention.

Selon la figure 1, des lunettes à montures percées comprennent deux verres 1, 2, reliés par un pont 3 et portant chacun une extrémité 4, 5 d'une charnière tenon 6, 7 d'une branche 8, 9. L'assemblage entre le pont 3, les extrémités 4, 5 des charnière tenons et des verres 1, 2 se fait par des points d'assemblage 10, 11, 12, 13 situés à l'intérieur du contour des verres 1, 2. Ces points d'assemblage sont non seulement inesthétiques parce qu'ils détériorent la pureté de la ligne des lunettes mais surtout ils gênent la vision latérale.

Les lunettes selon l'invention, représentées à la figure 2, se composent de verres 101, 102 reliés par un pont 103 et portant chacun une extrémité 104, 105 d'une charnière tenon non représentée d'une branche ; le pont 103 est muni de bras 105, 106 portant les plaquettes 107, 108.

Les verres 101, 102 sont assemblés aux montures par des points d'assemblage 110, 111, 112, 113 qui ne se situent pas à l'intérieur du contour des verres mais au niveau des extrémités 104, 105 des branches et aux extrémités du pont 103.

Les figures 3 et 4 montrent le détail d'un tel point d'assemblage 101-113.

On réalise tout d'abord un verre 200, dont on taille le contour 201 à la forme voulue, et au niveau des points d'assemblage du pont et de l'extrémité de la charnière tenon de la branche on découpe deux pattes 202, 203 en saillie par rapport au contour 201 du verre 200. Le cas échéant ces pattes sont munies d'un perçage 204, 205 pour recevoir une vis d'assemblage.

Selon une autre variante non représentée, la tige filetée est soudée à l'intérieur des logements 208, 209.

L'extrémité du pont 206 ou celle 207 de la charnière tenon de la branche non représentée, comporte un logement 208, 209 pour recevoir chacune, une patte 202, 203. Les logements 208, 209 sont également munis d'un perçage 210, 211 correspondant à la position des perçages 204, 205 pour solidariser chaque patte 202, 203 dans le logement 208, 209 par une vis et un boulon non représenté.

La figure 4 montre à échelle agrandie un tel point d'assemblage, par exemple le point d'assemblage de la patte 202 et du logement 208. Cette figure montre que le logement 208 a un côté ouvert et présente ainsi une section en forme de U pour recevoir la patte 202. La forme de la patte 202 est adaptée étroitement à celle du logement 208 pour réaliser un blocage par la forme ; l'assemblage est complété par une liaison collée et de préférence vissée et boulonnée par une vis et boulon non représentés logés dans le perçage 210 du logement 208 et le perçage 204 de la patte 200.

Le logement 208, ouvert, permet de fixer des verres d'épaisseur quelconque sur une même monture.

La figure 5 montre l'assemblage de la figure 4 une fois réalisé.

Cette vue à échelle agrandie par rapport à celle de la figure 2 laisse bien apparaître l'assemblage et notamment la vis 212. Cette vis est située en dehors du contour 201 du verre 200 de façon que la fixation ne gêne pas localement le champ de vision.

Dans l'exemple décrit, le logement 208 est formé à l'intérieur de l'extrémité de la branche 207 dont la paroi est relativement mince. En fait, la forme du logement 208 est indépendante de la forme extérieure de l'extrémité de la branche 207 ou, plus généralement, de l'extrémité de la charnière tenon ou du pont.

Bien que le point d'assemblage de lunette selon l'invention se fasse de préférence aux deux extrémités du pont et à l'extrémité de chacune des charnière tenons des branches, il est également possible d'adopter une solution intermédiaire avec un seul point d'assemblage à patte selon l'invention et un assemblage traditionnel pour l'autre partie du verre, par exemple le pont 206 ou l'extrémité de la branche 207 (figure 3).

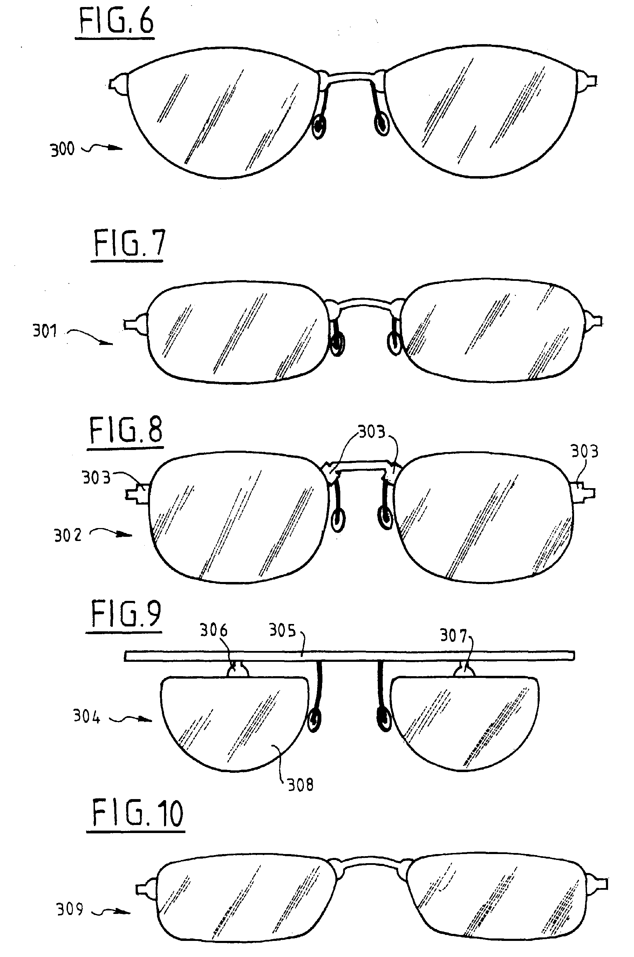

Différentes variantes de réalisation sont représentées aux figures 6 à 10. Les figures 6 et 7 correspondent au mode de réalisation de la figure 2 sauf que les verres ont une autre forme. Ces paires de lunettes 300, 301 ne seront pas décrites en détail.

La paire de lunettes de la figure 8 se distingue du mode de réalisation précédent par la disposition des assemblages entre le verre et le pont ou les charnières tenons. Pour cette paire de lunettes 302, les logements 303 portant tous la même référence ont une forme carrée.

Le mode de réalisation de la figure 9 de la paire de lunettes 304 comporte une traverse 305 portant des logements 306, 307, uniques, servant chacun à recevoir la patte non représentée d'un verre 308, 309.

Enfin, la variante de la figure 10 se distingue par exemple de celle 301 de la figure 7 en ce qu'elle 309 ne comporte pas de plaquette.

Les montures décrites ci-dessus peuvent être en différentes matières, en métal et notamment du titane mais également des matières plastiques ou des matières enrobées de plastique ou encore des fibres telles que des fibres de carbone.

On peut donner aux montures des effets de matières, en fonction de l'esthétique souhaitée, combinés à différents coloris à une ou plusieurs teintes.

La monture peut également être décorée et recevoir un logo ou une marque.

## Revendications

1. Lunettes à montures percées comprenant des verres reliés directement au pont et à la charnière tenon des branches par des points d'assemblage réalisés directement sur les verres,
caractérisées en ce qu'
au moins l'un des points d'assemblage, à l'extrémité du pont (206, 207) ou de la charnière tenon d'une branche, comprend :
- une patte (202, 203) découpée dans le verre, en saillie par rapport au contour (201) du verre, et munie d'un perçage (210),
- un organe d'assemblage formant un logement (208, 209) ayant un côté ouvert et une section en forme de U pour recevoir la patte (202, 203) par une liaison de forme et être solidarisé à celle-ci,
- la liaison entre la patte et l'organe d'assemblage se fait par vissage, notamment par boulonnage.

2. Lunettes selon la revendication 1,
caractérisées en ce que
chaque verre (200) comprend deux pattes découpées (202, 203), une patte intérieure et une patte extérieure, pour le point d'assemblage du pont (206) et celui de la charnière tenon de la branche.

3. Lunettes selon la revendication 1,
caractérisées en ce que
le logement a une section carrée triangulaire ou arrondie.
